# EUROPÄISCHE PATENTANMELDUNG

(11) **EP 0 694 870 A1**
(43) Veröffentlichungstag der Anmeldung: **31.01.1996**
(21) Anmeldenummer: 95111222.6
(22) Anmeldetag: 18.07.1995
(51) Int. Cl.: G06K 19/06

(54) **Verfahren zum Kennzeichnen von Gegenständen mit Code-Symbolen, optisch lesbarer Code**

(30) Priorität: 29.07.1994 CH 2401/94
(71) Anmelder: ELPATRONIC AG, CH-6303 Zug (CH)
(72) Erfinder: Weinstock, Julian, Cambridge Massachusetts (US)

(57) **Zusammenfassung**

Optisch maschinenlesbare Code-Symbole zur Kennzeichnung von Gegenständen, vorzugsweise von Mehrweg-Kunststoffflaschen sind so aufgebaut, dass sie eine Symmetrieachse besitzen. Die Code-Symbole können ferner aus einer Grundstellung heraus um einen vorbestimmten Winkel verdreht werden, um mit dem selben Code-Symbol eine Mehrzahl von Informationen darstellen zu können. Die symmetrischen Code-Symbole ergeben eine sehr gute Erkennbarkeit und Auswertbarkeit unter erschwerten Bedingungen, wie sie z.B. in einem Flaschen-Abfüllbetrieb auftreten.

## Beschreibung

Die Erfindung betrifft ein Verfahren zum Kennzeichnen von Gegenständen, insbesondere von wiederbefüllbaren Behältern, mit Code-Symbolen. Ferner betrifft die Erfindung einen optisch maschinenlesbaren Code sowie ein Code-Symbol für einen solchen Code.

Aus der DE-PS 36 26 775 ist es grundsätzlich bekannt, Mehwegbehälter bei jedem Rücklauf mit einer ergänzenden Codierung zu versehen. Die Codierung erfolgt dabei nur durch radial verlaufende Balken. Für das Problem, die Codierung möglichst fehlerfrei erfassbar und zudem platzsparend anzuordnen, wird dabei keine Lösung gezeigt. Letzteres ist insbesondere wichtig, da die Menge der Informationen, welche während der Lebensdauer des Behälters auf dem Behälter als Information über den Behälter selber und das Füllgut aufgebracht werden soll, im Zunehmen begriffen ist, und da andererseits immer kleinere Behälter (z.B. 0,3 Liter PET-Flaschen) derart kennzeichenbar sein sollen.

Aus der EP-A-354 362 ist es bekannt, PET-Flaschen mittels eines Lasers mit Codezeichen zu versehen und aus der DE-OS 29 43 811 ist ein spezielles Code-Leseverfahren bekannt, ebenfalls für balkenförmige Codezeichen.

Die DE-OS 30 32 520 beschreibt eine Anordnung zur Kontrolle der Einsatzdauer von zylndrischen Behältern, insbesondere Kegs mittels Codezeichen in Form von Strichen.

Aus der DE-OS 36 23 475 ist ein Verfahren zur Erkennung von im wesentlichen rotationssymmetrischen Gegenständen, insbesondere Behältern, welche mit Codezeichen versehen sind, bekannt. Dieses dient dazu, z.B. in der Getränkeindustrie, mit einer individualisierenden Kennzeichnung versehene Transportbehälter, aus welcher u.a. der Eigentümer und der Zeitpunkt der Inbetriebnahme zu ersehen ist, zu erkennen, um den Weg von Leergut verfolgen zu können. Dieses bekannte Verfahren betrifft aber weniger den Code-Aufbau, sondern mehr die Beseitigung des Problems, die Codierung auch dann sicher lesen zu können, wenn sie in bezug auf einen optischen Sensor keine genaue vorgegebene Lage hat. Bei dem bekannten Verfahren werden die Code-Zeichen als radial verlaufende Balken mit sich von der Umgebung unterscheidendem Remissionsgrad kreisringförmig um einen Mittelpunkt angeordnet.

In der Getränke-Industrie werden statt Glasflaschen mehr und mehr wiederbefüllbare Kunststoff-Flaschen, insbesondere PET-Flaschen eingeführt, bei denen die Anzahl der Wiederbefüllungen begrenzt ist und bei denen je nach Art der Füllprodukte bestimmte Füllproduktreihenfolgen eingehalten werden müssen. Solche wiederbefüllbaren Kunststoff-Flaschen müssen daher ausgeschieden werden, wenn die Anzahl ihrer Umläufe den Grenzwert erreicht hat. Das erfordert andererseits, dass vor jedem Umlauf, also bei jeder Befüllung, die Kunststoff-Flaschen mit wenigstens einem neuen Code-Symbol versehen wird, damit aus der Gesamtzahl der Code-Symbole die Anzahl der Umläufe ermittelt werden kann. Ferner sollte aus dem genannten Grund ein Code aufgebracht werden, der die Art des Füllgutes angibt, mit dem die FLasche schon befüllt worden ist.

Ein Code-Symbol ist aus der DE-OS 39 14 440 bekannt. Diese beschreibt einen optisch maschinenlesbaren Binärcode sowie ein Verahren zu seiner Bildung und zur Bestimmung seiner Grösse und Dichte. Der Code wird von einem Schachbrettmuster-Symbol gebildet, das die Information in Form von schwarzen und weissen Quadraten wiedergibt. Der Binärcode ist in seiner Grösse, seinem Format und in der Dichte seiner Information dynamisch variabel. Die Matrix hat einen Umfang, in welchem die Daten enthalten sind. Der Umfang ist mit einer Dichteanzeige zum Anzeigen der Dichte der Daten in der Matrix versehen. Durch Verwendung der Dichteanzeige und einer Grössenanzeige kann eine Abtasteinrichtung die Grösse und die Informationsdichte des Binärcodes berechnen. Dieser bekannte Binärcode ist bei wiederbefüllbaren Behältern wie z.B. Kunststoff-Flaschen nicht geeignet, weil auf letzteren weder eine Schachbrettmatrix aus schwarzen und weissen Quadraten, noch eine ausreichende Anzahl von solchen Binärcodes, die eine ausreichende Grösse haben, damit sich die Quadrate auch sicher genug erfassen lassen, untergebracht werden könnte.

Der Erfindung liegt die Aufgabe zugrunde ein Verfahren zu schaffen, mittels welchem Gegenstände, insbesondere Behälter, mit einem maschinenlesbaren Code gekennzeichnet werden können. Dabei sollen kleine Code-Symbole aufbringbar sein, damit mit einem handelsüblichen Laser in kurzer Zeit eine genügend tiefe Gravur erzielt wird, um auch unter erschwerten Bedingungen (z.B. Feuchtigkeit in einer Flaschenabfüllanlage) die Lesbarkeit zu gewährleisten. Die kleinen Code-Symbole sollen mit hoher Erkennbarkeit lesbar sein.

Diese Aufgabe wird bei einem Verfahren der eingangs genannten Art mit den kennzeichnenden Merkmalen des Anspruchs 1 erreicht.

Die aus Flächen zusammengesetzten symmetrischen Code-Symbole enthalten dank der Symmetrie eine Redundanz. Es hat sich gezeigt, dass dadurch im industriellen Umfeld (hohe Lesegeschwindigkeit bedingt durch hohen Flaschendurchsatz, kritische optische Erkennbarkeit infolge feuchter Umgebung mit Wasser in Form von Tropfen und Beschlag auf den Flaschen) die Erkennbarkeit wesentlich erhöht werden kann und dass die falsche Einordnung der Symbole beim Lesen/Erkennen infolge zufälligen (weissen) Rauschens im Erkennungs- und Signalpfad wesentlich herabgesetzt werden kann.

Vorzugsweise wird das Verfahren so ausgeführt, dass der Code aus Symbolen in einer Grundstellung und aus den Symbolen in dazu gedrehter Stellung gebildet wird. Damit lassen sich bereits mit einem Symbol, das z.B. in acht Stellungen verwendet wird, eine Vielzahl von Informationen codieren.

Die Erfindung betrifft ferner einen optisch maschinenlesbaren Code nach Anspruch 7. Weiter betrifft die Erfindung ein Code-Symbol für einen optisch maschinenlesbaren Code nach Anspruch 9.

Im folgenden werden Ausführungsbeispiele der Erfindung anhand der Figuren näher erläutert. Dabei zeigt
Figur 1 ein erstes Code-Symbol in seiner Grundstellung sowie in sieben weiteren gedrehten Stellungen;
Figur 2 ein anderes Code-Symbol in seiner Grundstellung sowie in sieben weiteren gedrehten Stellungen;
Figur 3 ein weiteres Code-Symbol in Grund- und gedrehten Stellungen;
Figur 4 ein weiteres Code-Symbol in Grundstellung;
Figur 5 ein weiteres Code-Symbol in Grundstellung; und
Figur 6 ebenfalls ein Code-Symbol in Grundstellung.

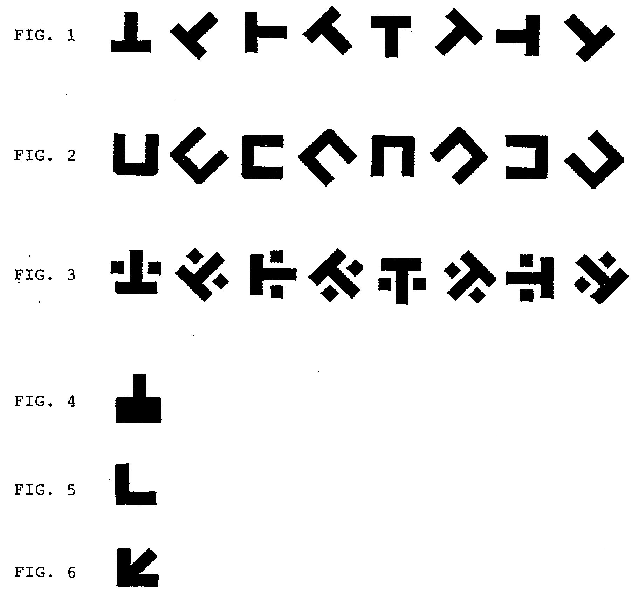

Figur 1 zeigt ein erstes Code-Symbol, welches in der Form eines auf dem Kopf stehenden T ausgeführt ist. Das gezeigte Code-Symbol wird vorzugsweise auf einen Mehrweg-Behälter, insbesondere auf eine Mehrweg-PET-Flasche aufgebracht. Das Aufbringen von Code-Zeichen auf Kunststoffflaschen, z.B. mittels Laser, ist bekannt. Dabei wird jeweils beim Flaschenrücklauf im Abfüllbetrieb ein Code auf die Flasche aufgebracht bzw. ein bestehender Code durch neue Code-Symbole ergänzt, woraus Informationen entnehmbar sind, die beim nächsten Flaschenrücklauf wieder ausgewertet werden. Solche Informationen können z.B. sein, die Anzahl der Wiederbefüllungen der Flasche, die Art des in der Flasche schon eingefüllten Produktes, die Identität des Füllbetriebes usw. Die einzelnen Code-Zeichen werden dabei wie bereits erwähnt vorzugsweise mittels eines Laserstrahls, der eine dem Codezeichen entsprechende Maske passiert, in das Kunststoffmaterial eingraviert. Die derart eingravierten Code-Zeichen werden bei einem Flaschenrücklauf jeweils optisch erfasst und durch eine Maschine, einen Rechner, erkannt, um den Informationsgehalt des Codes zu ermitteln. Da in einem Flaschenabfüllbetrieb ein sehr hoher Flaschendurchsatz erzielt werden soll, was einer kurzen Lese- und Erkennungszeit entspricht, und da in einem Flaschenabfüllbetrieb erschwerte Lesebedingungen herrschen, insbesonders Feuchtigkeit auf den Flaschen in Form von Wassertropfen und Beschlag, ist es nicht einfach, den Code jeweils fehlerfrei zu lesen und zu erkennen. Die Code-Symbole gemäss der Erfindung erhöhen nun die Lesbarkeit und Erkennbarkeit wesentlich. Da jedes Code-Symbol symmetrisch aufgebaut ist, ist die Wahrscheinlichkeit falscher Erkennung infolge weissen Rauschens wesentlich reduziert. Ist z.B. die Wahrscheinlichkeit von störendem Rauschen an einer bestimmten Stelle 0,1, so ist die Wahrscheinlichkeit störenden Rauschens an zwei Stellen gleichzeitig nur 0,01. Die Symmetrie der Code-Zeichen löst daher die Aufgabe der besseren Lesbarkeit und Erkennbarkeit bzw. der besseren Auswertbarkeit des Codes unter erschwerten Bedingungen. Vorzugsweise wird nun das Code-Symbol in verschiedenen Verdrehstellungen verwendet. So kann mit einem Code-Symbol eine grosse Menge von Information dargestellt werden. In Figur 1 ist dies für das ganz links in seiner Grundstellung dargestellte umgekehrte T-Symbol gezeigt, welches in den rechts anschliessenden Darstellungen jeweils um 45° gedreht ist. Auf diese Weise lassen sich mit einem Code-Symbol z.B. acht verschiedene Produktarten bezeichnen. Ein anderes Symbol kann dann für verschiedene Abfüller verwendet werden oder es können mit einem Code-Symbol in verschiedenen Drehstellungen Füllgutsequenzen auf der Flasche codiert werden. Die Grösse des Code-Symbols auf der Flasche kann dank der guten Erkennbarkeit sehr klein gewählt werden. Ein bevorzugter Durchmesser liegt z.B. in der Grössenordnung von ungefähr 6 mm.

Figur 2 zeigt ein weiteres Code-Symbol, welches in seiner Grundstellung im wesentlichen U-förmig ist. Auch bei diesem Code-Symbol verläuft die Symmetrieachse in der in der Zeichnung dargestellten Grundstellung in vertikaler Richtung. Auch für das Code-Symbol von Figur 2 sind anschliessend sieben Drehstellungen dargestellt, welche jeweils um 45° gegenüber der Grundstellung gedreht sind. Natürlich können anstelle der gezeigten Drehungen um 45° auch solche um andere Winkel vorgesehen sein. Entsprechend ergeben sich weniger oder mehr Abwandlungen des Code-Symbols aus der Grundstellung. Ein Vorteil der Drehung des Grundsymbols liegt auch darin, dass mit der gleichen Maskengrundform, wie sie für das Code-Symbol in der Grundstellung verwendet wird, auch die anderen Stellungen erzeugt werden können.

Figur 3 zeigt ein weiteres Code-Symbol, welches ebenfalls ein umgekehrtes T umfasst sowie zwei weitere Flächen. Auch hier verläuft die Symmetrieachse der in der Figur dargestellten Grundstellung vertikel.

Figur 4 zeigt nur die Grundstellung eines weiteren Code-Symbols, welches ebenfalls im wesentlichen T-förmig ist, wobei hier der T-Balken die doppelte Breite aufweist. Die aus der Grundstellung gedrehten entsprechenden Code-Symbole sind in der Figur nicht mehr dargestellt, können aber entsprechend den anderen Beispielen durch Drehung ohne weiteres erzeugt werden.

Figur 5 zeigt ein in der Grundstellung im wesentlichen L-förmiges Code-Symbol. Hier verläuft die Symmetrieachse in der Grundstellung nicht in vertikaler Richtung, sondern in einem Winkel von 45°. Auch für dieses Code-Symbol sind die entsprechend gedrehten Symbolabwandlungen nicht dargestellt.

Figur 6 zeigt ein im wesentlichen pfeilförmiges Code-Symbol, bei welchem die Symmetrieachse in der Grundstellung ebenfalls im 45°-Winkel verläuft. Auch zu diesem Code-Symbol können die gedrehten abgewandelten Stellungen ohne weiteres erzeugt werden, sind aber in der Zeichnung der Einfachheit halber nicht mehr dargestellt.

## Patentansprüche

1. Verfahren zum Kennzeichnen von Gegenständen, insbesondere wiederbefüllbaren Behältern, mit maschinenlesbaren Code-Symbolen, dadurch gekennzeichnet, dass auf den Behälter eine Anordnung aus Code-Symbolen aufgebracht wird, bei welcher das einzelne Code-Symbol aus mehreren Flächen besteht und jeweils eine Symmetrieachse aufweist.

2. Verfahren nach Anspruch 1, dadurch gekennzeichnet, dass das einzelne Code-Symbol in einer Grundstellung und in mehreren demgegenüber um eine Rotationsachse gedrehten Stellungen aufbringbar ist.

3. Verfahren nach Anspruch 1, dadurch gekennzeichnet, dass neben der Grundstellung sieben gedrehte Stellungen des Code-Symbols aufbringbar sind.

4. Verfahren nach Anspruch 1, dadurch gekennzeichnet, dass ein im wesentlichen T-förmiges, ein im wesentlichen U-förmiges, ein im wesentlichen L-förmiges und ein im wesentlichen pfeilförmiges Code-Symbol vorgesehen ist sowie ein Code-Symbol, welches neben einem T-förmigen Element zwei symmetrisch zum T angeordnete Flächen aufweist und ein Code-Symbol, welches im wesentlichen einem T-Element mit einem verbreiterten Querbalken entspricht.

5. Verfahren nach einem der Ansprüche 1-4, dadurch gekennzeichnet, dass die Code-Symbole mittels Laser auf dem Gegenstand aufgebracht werden.

6. Verfahren nach Anspruch 5, dadurch gekennzeichnet, dass der Behälter eine Kunststoff-Mehrwegflasche ist.

7. Optisch maschinenlesbarer Code, gekennzeichnet durch eine Anordnung von einzelnen Code-Symbolen, die jeweils aus mehreren Flächen bestehen und symmetrisch zu einer Symmetrieachse sind, wobei die Anordnung die Symbole in einer Grundform und in zu dieser um eine Rotationsachse gedrehter Form umfasst.

8. Optisch maschinenlesbarer Code nach Anspruch 8, dadurch gekennzeichnet, dass dieser T-förmige, U-förmige, L-förmige und pfeilförmige Code-Symbole umfasst.

9. Code-Symbol für einen optisch maschinenlesbaren Code, dadurch gekennzeichnet, dass das Code-Symbol aus mehreren Flächen besteht und symmetrisch zu mindestens einer Symmetrieachse ausgestaltet ist.
